# EUROPEAN PATENT APPLICATION

(11) **EP 1 804 117 A1**
(43) Date of publication of application: **04.07.2007**
(21) Application number: 06127233.2
(22) Date of filing: 27.12.2006
(51) Int. Cl.: G03B 11/00

(54) **Camera module**

(30) Priority: 28.12.2005 JP 2005378879
(71) Applicant: Mitsumi Electric Co., Ltd., Tama-Shi, Tokyo (JP)
(72) Inventor: Saito, Masahiro, Yamagata Yamagata (JP)
(74) Representative: Solf, Alexander

(57) **Abstract**

A camera module (1) includes a housing (2) which constitutes an outer shell of the camera module (1); a lens unit (3) having an optical system of the camera module (1); a cylindrical barrel (4) made of a synthetic resin for holding the lens unit (3); a plate-shaped IR cut filter (8) disposed below the lens unit (3); and an image pick-up device (9) provided below the IR cut filter (8). The IR cut filter (8) has a bottom surface (8b) which faces the image pick-up device (9), wherein the bottom surface (8b) is defined by lower edges, and the lower edges are chamfered.

## Description

### BACKGROUND OF THE INVENTION

### Field of the Invention

The present invention relates to a camera module, and more particularly to a relatively small camera module to be mounted on an electronic apparatus such as a back monitor for a vehicle and a cellular phone and the like.

### Description of the Prior Art

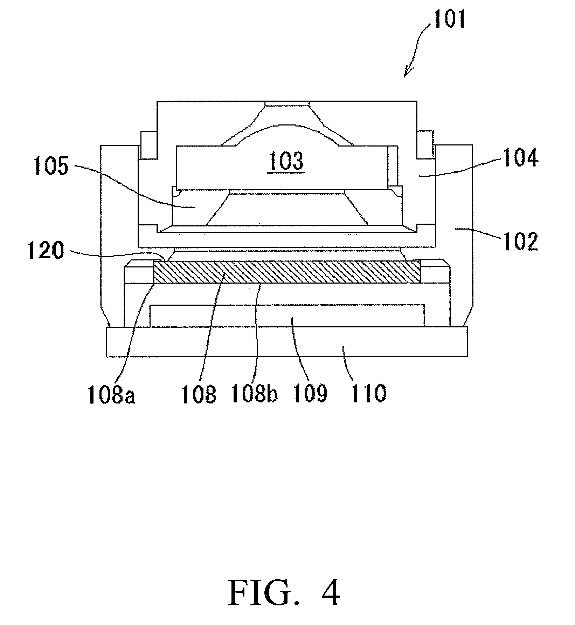

A relatively small camera module is mounted on an electronic apparatus such as a cellular phone and the like. Such a camera module includes an image pick-up device such as a CMOS sensor or a CCD sensor. FIG. 4 is a cross-sectional view showing a conventional camera module 101. The camera module 101 includes a housing 102 which constitutes an outer shell of the camera module 101, a lens unit 103 having an optical system of the camera module 101, a cylindrical barrel 104 made of a synthetic resin for holding the lens unit 103, a ring-shaped stopper 105 made of a synthetic resin for fixing the lens unit 103 inside the barrel 104, a plate-shaped IR cut filter 108 disposed below the lens unit 103, an image pick-up device 109 provided below the IR cut filter 108, and a substrate 110 on which the image pick-up device 109 is mounted.

The IR cut filter is a rectangular glass part which reflects infrared rays while allowing visible light to be transmitted therethrough. The IR cut filter 108 is attached to an IR cut filter attachment portion 120 formed inside the housing 102 with an adhesive.

When the IR cut filter 108 is attached to the IR cut filter attachment portion 120, the IR cut filter 108 is grasped with tweezers and then it is placed on the IR cut filter attachment portion 120. In this state, the IR cut filter 108 is bonded to the IR cut filter attachment portion 120 by applying an adhesive to the periphery of the IR cut mounting filter 108. One example of such a conventional camera module is disclosed in JP-A No. 2005-72978.

As described above, in the camera module 101, when the IR cut filter 108 is attached to the IR cut filter attachment portion 120, the IR cut filter 108 is grasped with tweezers. Therefore, there is a case that a peripheral edge 108a of the IR cut filter 108 is slightly chipped, and such a minute chip of the glass material of the IR cut filter 8 falls on the surface of the image pick-up device 109 and adheres thereto. In such a case, there is a problem in that it is not possible to take a fine image by the camera module 101.

In particular, in the case where such chipping occurs in the lower peripheral edge 108a of the bottom surface 108b of the IR cut filter 108, such a minute chip of the glass material is likely to fall on the surface of the image pick-up device 109 and therefore such a problem as described above is likely to occur.

### SUMMARY OF THE INVENTION

The present invention has been made in view of the above problem. It is, therefore, an object of the present invention to provide a camera module which can prevent a peripheral edge of an IR cut filter from being chipped when the IR cut filter is attached to an IR filter attachment portion of the camera module.

In order to achieve the above object, the present invention is directed to a camera module which includes a housing which constitutes an outer shell of the camera module; a lens unit having an optical system of the camera module; a cylindrical barrel made of a synthetic resin for holding the lens unit; a plate-shaped IR cut filter disposed below the lens unit; and an image pick-up device provided below the IR cut filter. The IR cut filter has a bottom surface which faces the image pick-up device, wherein the bottom surface is defined by lower edges, and the lower edges are chamfered.

According to the camera module having the structure described above, the IR cut filter is disposed within the housing so that its bottom surface faces the image pick-up device, and the four lower edges of the IR cut filter which define the bottom surface are chamfered. Therefore, when the IR cut filter 8 is grasped with tweezers for attaching it to the IR cut filter attachment portion, there is less possibility that the peripheral edge of the IR cut filter is chipped. As a result, it is possible to prevent a minute chip chipped from the IR cut filter from adhering to the surface of the image pick-up device 9 thereby making it difficult to obtain a fine image.

In the camera module according to the present invention, it is preferred that the housing has an IR filter attachment portion having stepped walls which surround the peripheral edges of the IR cut filter, and the lower edges of the stepped walls of the IR filter attachment portion are also chamfered.

According to the structure described above, although in the conventional camera module in which IR cut filter attachment portion does not have such chamfered lower edges, there is a case that light that has entered into the camera module is diffusely reflected at the angled lower edges of the IR cut filter attachment portion, the camera module of the present invention having the IR cut filter attachment portion 20 with the chamfered lower edges can prevent occurrence of such undesirable reflection of light. As a result, it is possible to prevent the image pick-up device from being affected by such undesirable reflection of light, thereby enabling a fine image to be taken by the camera module.

The above and other objects, features and advantages of the present invention will be apparent from the following description when taken in conjunction with the accompanying drawings which illustrate preferred embodiments of the present invention by way of example.

### BRIEF DESCRIPTION OF THE DRAWINGS

FIG. 1 is a cross-sectional view showing a camera module according to an embodiment of the present invention;
FIG. 2 is a perspective view of an IR cut filter 8 provided in the camera module shown in FIG. 1;
FIG. 3 is an illustration for explaining a manufacturing process of the IR cut filter 8 used in the camera module shown in FIG. 1, in which FIG 3(a) shows a glass plate of an infrared ray reflection glass 80 from which a plurality of IR cut filters are formed (this figure shows a state before cutting of the glass plate being made), and FIG 3(b) shows a state after the cutting of the glass plate has been made; and
FIG. 4 is a cross-sectional view showing a conventional camera module.

### DETAILED DESCRIPTION OF THE INVENTION

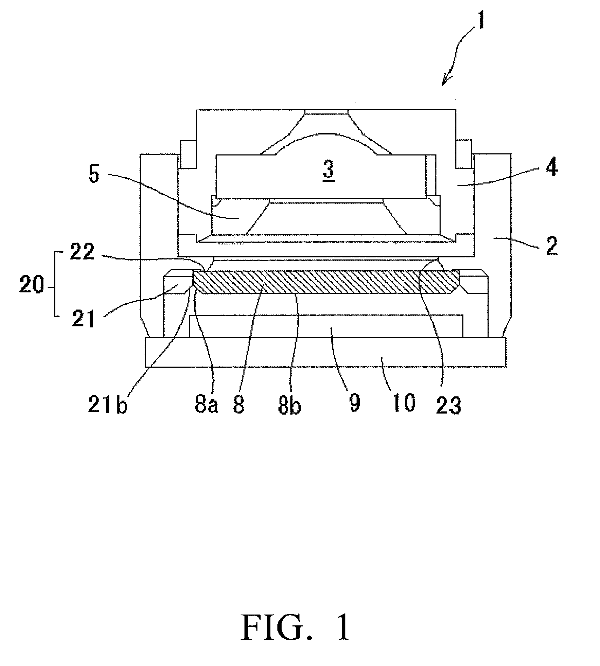

A camera module according to an embodiment of the present invention will be described below with reference to FIGS. 1 to 3. FIG. 1 is a cross-sectional view showing a camera module 1 according to an embodiment of the present invention. Note that in the following description, the terms "upper" or "top" and "lower" or "bottom" are respectively used to denote the direction in FIG. 1 where a barrel 4 of a camera module 1 is located and the direction in FIG. 1 where a substrate 10 is located.

The camera module 1 is composed from a housing 2 which constitutes an outer shell of the camera module 1; a lens unit 3 having an optical system of the camera module 1; a cylindrical barrel 4 made of a synthetic resin for holding the lens unit 3; a plate-shaped IR cut filter 8 disposed below the lens unit 3; and an image pick-up device 9 provided below the IR cut filter 8. The IR cut filter 8 is formed from a rectangular glass member and has a bottom surface 8b which faces the image pick-up device 9, wherein the bottom surface is defined by four lower edges, and the lower edges are chamfered.

In more details, the housing 2 is a component having a roughly cubic shape and having a hollow space therein, and made of a synthetic resin material. Inside the hollow space of the housing 2, the barrel 4 (which will be described later in detail) is disposed. Further, inside the hollow space of the housing 2, there is formed an IR cut filter attachment portion 20 to which the IR cut filter 8 is attached with an adhesive. Specifically, the IR cut filter attachment portion 20 is provided on the lower side of the hollow space of the housing 2. The IR cut filter attachment portion 20 includes stepped walls 21 which surround the peripheral edges of the IR cut filter 8 and support ribs 22 which protrude inwardly from the upper portions of the stepped walls 21 to define an opening 23. The IR cut filter 8 is placed on the support ribs 22 so that the peripheral edges of the IR cut filter 8 are surrounded by the stepped walls 21. The lower edges 21b of the stepped walls 21 of the IR filter attachment portion 20 are also chamfered.

The barrel 4 is a cylindrical component made of a synthetic resin and having a hollow space therein. Inside the hollow space of the barrel 4, the lens unit 3 is provided, and a stopper 5 is also provided inside the hollow space below the lens unit 3 to hold the lens unit 3 inside the barrel 4. The lens unit 3 constitutes an optical system of the camera module 1.

The stopper 5 is a ring-shaped member made of a synthetic resin material. As described above, the stopper 5 is disposed in the hollow space of the barrel 4 below the lens unit 3. The stopper 5 is press-fitted into the hollow space of the barrel 4 from the bottom thereof so that the outer circumferential surface of the stopper 5 is in contact with the inner circumferential surface of the barrel 4 and the upper surface of the stopper 5 is also in contact with the bottom of the lens unit 3. In this way, the lens unit 3 is held inside the barrel 4 by the stopper 5.

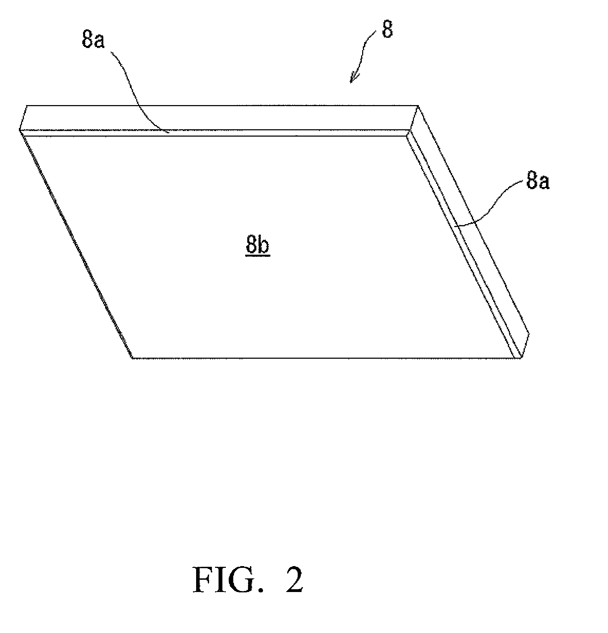

The IR cut filter 8 is a rectangular glass member (infrared ray reflection glass) which reflects infrared rays while allowing visible light to be transmitted therethrough. Further, as described above, the IR cut filter 8 is disposed within the housing 2 so that its bottom surface 8b faces the image pick-up device 9. Furthermore, as shown in FIG. 1 and FIG. 2, four lower edges of the IR cut filter 8 which define the bottom surface 8b are chamfered.

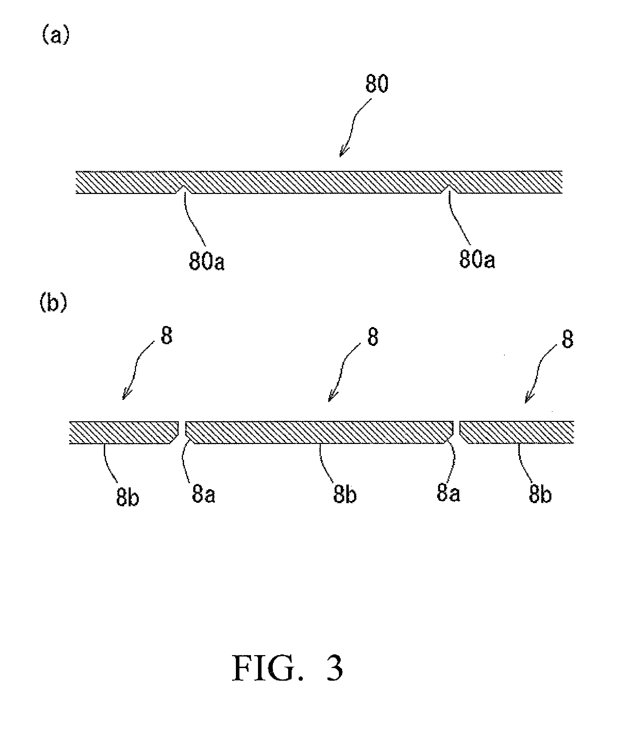

As shown in FIG. 3(a) and FIG. 3(b), the IR cut filter 8 is manufactured by cutting an infrared ray reflection glass material 80 into a plurality of predetermined pieces. In more details, as shown in FIG. 3 (a), the bottom surface of the infrared ray reflection glass material 80 is preliminarily cut along predetermined lines to form grooves 80a each having a V-shaped cross-section. Then, the infrared ray reflection glass material 80 is cut off along the V-shaped grooves 80a, thereby a plurality of IR cut filters 8 each having the chamfered lower edges 8a can be obtained.

As described above, the thus manufactured IR cut filter 8 is attached to the IR cut filter attachment portion 20 provided inside the housing 2 with an adhesive. In more details, first, the IR cut filter 8 is grasped with tweezers, and then the IR cut filter 8 is placed on the IR cut filter attachment portion 20 using the tweezers so that the peripheral portion of the top surface thereof is placed on the support ribs 22 and the peripheral edges thereof are surrounded by the stepped walls 21. In this state, the peripheral portion of the bottom surface of the IR cut filter 8 is bonded to IR cut filter attachment portion 20 (that is, to the stepped walls 21) with an adhesive.

Note that in FIG. 1 the reference numeral 9 denotes an image pick-up device disposed below the IR cut filter, and the image pick-up device 9 is mounted on the substrate 10.

Hereinbelow, a description will be made with regard to the functions and advantages of the embodiment of the camera module 1 described above.

As described above, in the camera module 1 of this embodiment, the IR cut filter 8 is disposed within the housing 2 so that its bottom surface 8b faces the image pick-up device 9, and the four lower edges 8a of the IR cut filter 8 which define the bottom surface 8b are chamfered. Therefore, when the IR cut filter 8 is grasped with tweezers for attaching it to the IR cut filter attachment portion 20, there is less possibility that the peripheral edge 8a of the IR cut filter 8 is chipped. As a result, it is possible to prevent a minute chip chipped from the IR cut filter 8 from adhering to the surface of the image pick-up device 9 thereby making it difficult to obtain a fine image.

Further, in the camera module 1 of this embodiment, the housing 2 is formed with the IR cut filter attachment portion 20, and the stepped walls 21 of the IR cut filter attachment portion 20 which surround the peripheral edges of the IR cut filter 8 have the chamfered lower edges 21b. Although in the conventional camera module 101 in which IR cut filter attachment portion 120 does not have such chamfered lower edges, there is a case that light that has entered into the camera module 101 is diffusely reflected at the angled lower edges of the IR cut filter attachment portion 120, the camera module 1 of this embodiment including the IR cut filter attachment portion 20 having the stepped walls 21 with the chamfered lower edges 21a can prevent occurrence of such undesirable reflection of light. As a result, it is possible to prevent the image pick-up device 9 from being affected by such undesirable reflection of light, thereby enabling a fine image to be obtained by the camera module 1.

Finally, it should be understood that the present invention is not limited to the preferred embodiment described hereinabove and, needless to say, a variety of modifications or variations may be made without departing from the scope of the invention defined in the following claims.

## Claims

1. A camera module (1), comprising:
a housing (2) which constitutes an outer shell of the camera module (1);
a lens unit (3) having an optical system of the camera module (1);
a cylindrical barrel (4) made of a synthetic resin for holding the lens unit (3);
a plate-shaped IR cut filter (8) disposed below the lens unit (3); and
an image pick-up device (9) provided below the IR cut filter (8);
**CHARACTERIZED IN THAT** the IR cut filter (8) has a bottom surface which faces the image pick-up device (9), wherein the bottom surface is defined by lower edges, and the lower edges are chamfered.

2. The camera module (1) as claimed in claim 1, wherein the housing (2) has an IR filter attachment portion (20) having stepped walls (21) which surround the peripheral edges of the IR cut filter (8), and the lower edges of the stepped walls (21) of the IR filter attachment portion (20) are also chamfered.
